# EUROPÄISCHE PATENTANMELDUNG

(11) **EP 0 624 591 A1**
(43) Veröffentlichungstag der Anmeldung: **17.11.1994**
(21) Anmeldenummer: 94107354.6
(22) Anmeldetag: 11.05.1994
(51) Int. Cl.: C07F 7/08, C07F 7/21

(54) **Organosiliciumverbindungen mit käfigartiger Struktur**

(30) Priorität: 13.05.1993 DE 4316101
(71) Anmelder: Wacker-Chemie GmbH, D-81737 München (DE)
(72) Erfinder: Freyer, Christian, Dr., D-84489 Burghausen (DE); Wolferseder, Josef, D-84503 Altötting (DE); Peetz, Udo, D-84489 Burghausen (DE)

(57) **Zusammenfassung**

Organosiliciumverbindungen der allgemeinen Formel

(RSiO_{3/2})_{z} (I),

worin
- z: 4, 6, 8, 10, 12 oder 14 ist und
- R: gleich oder verschieden sein kann und Wasserstoffatom, organischer Rest oder Reste der Formel

R¹₃SiO(SiR²₂O)ₙ- (II)

bedeutet, wobei R¹ gleich oder verschieden sein kann und Wasserstoffatom, organischer Rest oder Organosiliciumrest bedeutet, R² gleich oder verschieden sein kann und Wasserstoffatom oder organischen Rest bedeutet und n 0 oder eine ganze Zahl ist,
mit der Maßgabe, daß die Organosiliciumverbindung der Formel (I) mindestens einen Rest R der Formel (II) mit n > 0 aufweist.

## Beschreibung

Die Erfindung betrifft Organosiliciumverbindungen mit käfigartiger Struktur, Verfahren zu deren Herstellung sowie deren Verwendung.

Organosiliciumverbindungen mit käfigartiger Struktur und Verfahren zu deren Herstellung sind bereits bekannt. Hierzu sei beispielsweise auf DE 38 37 397 A1 (Wacker-Chemie GmbH; ausgegeben am 10. Mai 1990) bzw. die entsprechende US 5,047,492 (ausgegeben am 10. September 1991), P.A. Agaskar, Inorg. Chem. 29(9) (1990) 1603, P.A. Agaskar, V.W. Day und W.G. Klemperer, J. Am. Chem. Soc. 109 (1987) 5554-6, D. Hoebbel et al, Z. Chem. 29(7) (1989), 260 und I. Hasegawa, S. Sakka 398 (1989) 140 verwiesen.

Diese Verbindungen sind jedoch nicht oder nur unbefriedigend mit Organopolysiloxanen homogen mischbar, woraus sich Nachteile bei dem Einsatz dieser Verbindungen in siliconhaltigen Zusammensetzungen ergeben.

Gegenstand der vorliegenden Erfindung sind Organosiliciumverbindungen der allgemeinen Formel

(RSiO_{3/2})_{z} (I),

worin
- z: 4, 6, 8, 10, 12 oder 14, bevorzugt 6, 8 oder 10, besonders bevorzugt 8, ist und
- R: gleich oder verschieden sein kann und Wasserstoffatom, organischer Rest oder Reste der Formel

R¹₃SiO(SiR²₂O)ₙ- (II)

bedeutet, wobei R¹ gleich oder verschieden sein kann und Wasserstoffatom, organischer Rest oder Organosiliciumrest bedeutet, R² gleich oder verschieden sein kann und Wasserstoffatom oder organischen Rest bedeutet und n 0 oder eine ganze Zahl, bevorzugt 0 oder eine ganze Zahl von 1 bis 20, besonders bevorzugt 0 oder eine ganze Zahl von 1 bis 10, ist,
mit der Maßgabe, daß die Organosiliciumverbindung der Formel (I) mindestens einen Rest R der Formel (II) mit n > 0 aufweist.

Vorzugsweise weisen die erfindungsgemäßen Organosiliciumverbindungen der Formel (I) mehr als einen Rest R der Formel (II) mit n > 0 auf. Besonders bevorzugt sind jedoch Organosiliciumverbindungen der Formel (I), in denen sämtliche Reste R die Bedeutung von Resten der Formel (II) haben, wobei n durchschnittlich 1/z bis 4 ist, wobei z die oben angegebene Bedeutung hat.

Vorzugsweise hat in Rest R der Formel (II) nicht mehr als ein Rest R¹ die Bedeutung von Wasserstoffatom.

Hat in Formel (II) R¹ die Bedeutung von Organosiliciumrest, so handelt es sich dabei vorzugsweise um Reste der Formel

R³₃SiO(SiR⁴₂O)ₘ- (III),

wobei R³ und R⁴ jeweils unabhängig voneinander gleich oder verschieden sein können und eine für R² angegebene Bedeutung haben und m 0 oder eine ganze Zahl, bevorzugt 0, ist.

Hat R¹ die Bedeutung von Organosiliciumrest der Formel (III), so weist Rest R der Formel (II) vorzugsweise mindestens zwei Reste R¹ gleich Organosiliciumrest der Formel (III) auf.

Vorzugsweise hat in Rest R¹ der Formel (III) nicht mehr als ein Rest R³ die Bedeutung von Wasserstoffatom.

Obwohl in den Formeln (I) und (II) nicht angegeben und auch nicht bevorzugt, kann es sich bei Rest R auch um zwei-, drei- oder vierwertige Organosiliciumreste R handeln, beispielsweise wenn mindestens ein R¹ ein zweiwertiger organischer Rest oder ein zweiwertiger Organosiliciumrest ist oder falls ein Rest R¹ in Formel (II) durch eine Bindung ersetzt ist. In einem solchen Fall fungiert R als Verbindungsglied zwischen zwei, drei oder vier Siliciumatomen innerhalb eines käfigartigen Moleküls und/oder zwischen zwei käfigartigen Einheiten.

Vorzugsweise handelt es sich bei R gleich organischem Rest um gegebenenfalls substituierte Kohlenwasserstoffreste mit 1 bis 18 Kohlenstoffatomen, wobei Methyl-, n-Propyl-, 3-Chlorpropyl-, Cyclohexyl-, i-Octyl-, Phenyl- oder Vinylrest besonders bevorzugt sind.

Beispiele für organische Reste R sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste als organischer Rest R sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, Perfluorhexyl-ethyl- sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Acyloxyalkylreste, wie der 3-Acryloxypropyl- und 3-Methacryloxypropylrest und Hydroxyalkylreste, wie der Hydroxypropylrest.

Beispiele für Reste R der Formel (II) sind Me₃SiO(SiPhMeO)₀₋₄-, (Me₃SiO)₂MeSiOSiMe₂O-, (ViMe₂SiO)₂MeSiOSiMe₂O-, (HMe₂SiO)₂MeSiOSiMe₂O-, Me₃SiO(SiMe₂O)₀₋₄-, HMe₂SiO(SiMe₂O)₀₋₄-, ViMe₂SiO(SiMe₂O)₀₋₄-, Me₃SiO(SiHMeO)₀₋₄-, Me₃SiO(SiMeViO)₀₋₄-, ViMe₂SiO(SiMeViO)₀₋₄-, HMe₂SiO(SiHMeO)₀₋₄-, Me₃SiO[(SiMe₂O)/(SiHMeO)]₀₋₄-, Me₃SiO[(SiMe₂O)/(SiViMeO)]₀₋₄-, (Me₃SiO)₃SiOSiMe₂O-, (ViMe₂SiO)₃SiOSiMe₂O-, (HMe₂SiO)₃SiOSiMe₂O-, (ClCH₂CH₂CH₂)Me₂SiO(SiMe₂O)₀₋₄-, -(SiMe₂O)₁₋₅-, -(SiViMeO)₁₋₅-, -(SiHMeo)₁₋₅-, -(SiPhMeO)₁₋₅- und -(Si(CH₂CH₂CF₃)MeO)₁₋₅-, wobei Me Methylrest, Vi Vinylrest und Ph Phenylrest bedeutet.

Bevorzugt handelt es sich bei Rest R der Formel (II) um Me₃SiO(SiMe₂O)₀₋₄-, HMe₂SiO(SiMe₂O)₀₋₄-, ViMe₂SiO(SiMe₂O)₀₋₄-, Me₃SiO(SiHMeO)₀₋₄-, Me₃SiO(SiMeViO)₀₋₄-, ViMe₂SiO(SiMeViO)₀₋₄-, HMe₂SiO(SiHMeO)₀₋₄-, Me₃SiO[(SiMe₂O)/(SiHMeO)]₀₋₄-, Me₃SiO[(SiMe₂O)/(SiViMeO)]₀₋₄-, (Me₃SiO)₃SiOSiMe₂O-, (ViMe₂SiO)₃SiOSiMe₂O-, (HMe₂SiO)₃SiOSiMe₂O-, (ClCH₂CH₂CH₂)Me₂SiO(SiMe₂O)₀₋₄-, -(SiMe₂O)₁₋₅-, -(SiViMeO)₁₋₅-, -(SiHMeO)₁₋₅-, -(SiPhMeO)₁₋₅- und -(Si(CH₂CH₂CF₃)MeO)₁₋₅-, wobei Me₃SiO(SiMe₂O)₀₋₄-, HMe₂SiO(SiMe₂O)₀₋₄-, ViMe₂SiO(SiMe₂O)₀₋₄-, Me₃SiO(SiHMeO)₀₋₄-, Me₃SiO(SiMeViO)₀₋₄-, ViMe₂SiO(SiMeViO)₀₋₄-, HMe₂SiO(SiHMeO)₀₋₄-, Me₃SiO[(SiMe₂O)/(SiHMeO)]₀₋₄-, Me₃SiO[(SiMe₂O)/(SiViMeO)]₀₋₄-, (ViMe₂SiO)₃SiOSiMe₂O- und (HMe₂SiO)₃SiOSiMe₂O- besonders bevorzugt sind und Me Methylrest, Vi Vinylrest und Ph Phenylrest bedeutet.

Vorzugsweise handelt es sich bei R¹ um Wasserstoffatom, Methyl-, Vinyl-, 3-Chlorpropyl- und Organosiliciumreste, wobei Wasserstoffatom, Methyl-, Vinyl- und Organosiliciumreste besonders bevorzugt sind.

Beispiele für organische Reste R¹ sind die für R gleich organischer Rest angegebenen Beispiele.

Beispiele für R¹ gleich Organosiliciumreste sind der Me₃SiO-, ViSiMe₂O-, HSiMe₂O- und (ClCH₂CH₂CH₂)SiMe₂O-Rest sowie alle für Rest R genannten Organosiliciumreste, wobei Me₃SiO-, ViSiMe₂O-, HSiMe₂O- und (ClCH₂CH₂CH₂)SiMe₂O-Rest bevorzugt und Me₃SiO-, ViSiMe₂O- und HSiMe₂O-Rest besonders bevorzugt sind mit Me gleich Methylrest und Vi gleich Vinylrest.

Vorzugsweise handelt es sich bei R² um Wasserstoffatom, Methyl-, Vinyl-, Phenyl- und 3,3,3-Trifluorpropylrest, wobei Wasserstoffatom, Methyl- und Vinylreste besonders bevorzugt sind.

Beispiele für organische Reste R² sind die für Rest R gleich organischer Rest angegebenen Beispiele.

Vorzugsweise handelt es sich bei R³ um Wasserstoffatom, Methyl-, Vinyl- und 3-Chlorpropylrest, wobei Wasserstoffatom, Methyl- und Vinylrest besonders bevorzugt sind.

Beispiele für organische Reste R³ sind die für Rest R gleich organischer Rest angegebenen Beispiele.

Vorzugsweise handelt es sich bei R⁴ um Wasserstoffatom, Methyl- und Vinylrest, wobei der Methylrest besonders bevorzugt ist.

Beispiele für organische Reste R⁴ sind die für Rest R gleich organischer Rest angegebenen Beispiele.

Beispiele für die erfindungsgemäßen Organosiliciumverbindungen der Formel (I) sind
[ViMe₂SiO(SiMe₂O)ₙSiO_{3/2}]_{z}
[HMe₂SiO(SiMe₂O)ₙSiO_{3/2}]_{z}
[Me₃SiO(SiViMeO)ₙSiO_{3/2}]_{z}
[Me₃SiO(SiHMeO)ₙSiO_{3/2}]_{z}
[ViMe₂SiO(SiViMeO)ₙSiO_{3/2}]_{z}
[HMe₂SiO(SiHMeO)ₙSiO_{3/2}]_{z}
[(ViMe₂SiO)₃SiOSiMe₂OSiO_{3/2}]_{z}
[(HMe₂SiO)₃SiOSiMe₂OSiO_{3/2}]_{z}
[(Me₃SiO)₃SiOSiMe₂OSiO_{3/2}]_{z}
[Me₃SiO(SiMe₂O)ₙSiO_{3/2}]_{z}
[Me₃SiO(SiPhMeO)ₙSiO_{3/2}]_{z}
[Me₃Sio(Si(3,3,3-trifluorpropyl)MeO)ₙSiO_{3/2}]_{z}
[(ClH₂CH₂CH₂)Me₂SiO(SiMe₂O)ₙSiO_{3/2}]_{z}
[(Me₃SiO)₂MeSiOSiMe₂OSiO_{3/2}]_{z}
[(ViMe₂SiO)₂MeSiOSiMe₂OSiO_{3/2}]_{z}
[(HMe₂SiO)₂MeSiOSiMe₂OSiO_{3/2}]_{z}, wobei
[ViMe₂SiO(SiMe₂O)ₙSiO_{3/2}]_{z}
[HMe₂SiO(SiMe₂O)ₙSiO_{3/2}]_{z}
[Me₃SiO(SiViMeO)ₙSiO_{3/2}]_{z}
[Me₃SiO(SiHMeO)ₙSiO_{3/2}]_{z}
[ViMe₂SiO(SiViMeO)ₙSiO_{3/2}]_{z}
[HMe₂SiO(SiHMeO)ₙSiO_{3/2}]_{z}
[(ViMe₂SiO)₃SiOSiMe₂OSiO_{3/2}]_{z}
[(HMe₂SiO)₃SiOSiMe₂OSiO_{3/2}]_{z}
[(Me₃SiO)₃SiOSiMe₂OSiO_{3/2}]_{z}
[Me₃SiO(SiMe₂O)ₙSiO_{3/2}]_{z} bevorzugt und
[ViMe₂SiO(SiMe₂O)ₙSiO_{3/2}]_{z}
[HMe₂SiO(SiMe₂O)ₙSiO_{3/2}]_{z}
[Me₃SiO(SiViMeO)ₙSiO_{3/2}]_{z}
[Me₃SiO(SiHMeO)ₙSiO_{3/2}]_{z}
[ViMe₂SiO(SiViMeO)ₙSiO_{3/2}]_{z}
[HMe₂SiO(SiHMeO)ₙSiO_{3/2}]_{z}
[(ViMe₂SiO)₃SiOSiMe₂OSiO_{3/2}]_{z}
[(HMe₂SiO)₃SiOSiMe₂OSiO_{3/2}]_{z} besonders bevorzugt sind mit Me gleich Methylrest, Vi gleich Vinylrest, Ph gleich Phenylrest, z gleich 6, 8 oder 10 und n durchschnittlich gleich 1/z bis 4.

Die erfindungsgemäßen Organosiliciumverbindungen der Formel (I) haben den Vorteil, daß sie mit flüssigen Organopolysiloxanen ausgezeichnet mischbar sind. Beispielsweise sind die erfindungsgemäßen Organosiliciumverbindungen als niedrigviskose Substanzen unbegrenzt mit mittelviskosen Polydimethylsiloxan-Derivaten, d. h. mit solchen mit einer Viskosität bis 10000 mPas, homogen mischbar, als höherviskose Substanzen bis etwa 80 %.

Des weiteren haben die erfindungsgemäßen Organosiliciumverbindungen den Vorteil, daß sie eine hohe Dichte an organofunktionellen Resten, wie etwa R¹, R², R³ und R⁴, in Gruppen der Formel (II) aufweisen.

Die erfindungsgemäßen Organosiliciumverbindungen der Formel (I) können nach verschiedenen Verfahren hergestellt werden.

### Verfahren (1)

Ein weiterer Gegenstand der vorliegenden Erfindung ist ein Verfahren zur Herstellung der Organosiliciumverbindungen gemäß Formel (I), dadurch gekennzeichnet, daß käfigartige Silicate der Formel

(A₄N⁺)_{z} [SiO_{5/2}⁻]_{z} · y H₂O (IV),

worin
- y: eine Zahl zwischen 50 und 300, bevorzugt zwischen 60 und 80, ist,
- z: die in Formel (I) genannte Bedeutung hat und
- A: gleich oder verschieden sein kann und einen Alkylrest, bevorzugt einen Alkylrest mit 1 bis 4 Kohlenstoffatomen, bedeutet,
mit mindestens einer Verbindung (A) der Formel

R⁵₃SiX (V),

und/oder deren Hydrolysat bzw. Kondensat, wobei
- R⁵: gleich oder verschieden sein kann und eine für R² angegebene Bedeutung hat und
- X: eine Hydroxygruppe, einen Organyloxyrest oder ein Halogenatom bedeutet,
sowie
mindestens einer Organosiliciumverbindung (B), ausgewählt aus der Gruppe bestehend aus cyclischen Organopolysiloxanen der Formel

(SiR⁶₂O)ₓ (VI),

worin
- R⁶: gleich oder verschieden sein kann und eine für R² angegebene Bedeutung hat und
- x: 3 bis 10, vorzugsweise 4 bis 7, bedeutet,
Silanen der Formel

R⁷₂SiD₂ (VII),

und/oder deren Teilhydrolysaten bzw. -kondensaten, worin
- R⁷: gleich oder verschieden sein kann und eine für R² angegebene Bedeutung hat und
- D: gleich oder verschieden sein kann und eine für X angegebene Bedeutung hat, und
Organopolysiloxanen der Formel

R⁸₃₋ₐEₐSiO-(SiR⁸₂O)ₚ-SiEₐR⁸₃₋ₐ (VIII),

worin
- R⁸: gleich oder verschieden sein kann und eine für R² angegebene Bedeutung hat,
- a: gleich oder verschieden sein kann und 0 oder 1 bedeutet,
- p: 1 bis 1000, bevorzugt 1 bis 150 ist, und
- E: gleich oder verschieden sein kann und eine für X angegebene Bedeutung hat,
umgesetzt wird.

Als Komponente (B) wird vorzugsweise Silan der Formel (VII) eingesetzt.

Das erfindungsgemäße Verfahren (1) kann in Abwesenheit oder Anwesenheit von Katalysatoren durchgeführt werden, wobei vorzugsweise kein Katalysator eingesetzt wird. Falls Katalysator eingesetzt wird, handelt es sich vorzugsweise um saure Katalysatoren, insbesondere Salzsäure.

Beispiele für saure Katalysatoren sind Lewis-Säuren, wie AlCl₃, BF₃, TiCl₄, SnCl₄, SO₃, PCl₅, POCl₃, FeCl₃ und dessen Hydrate, ZnCl₂, Phosphornitrilchloride, Brönsted-Säuren, wie Salzsäure, Bromwasserstoffsäure, Schwefelsäure, Chlorsulfonsäure, Phosphorsäure, o- und m-Polyphosphorsäuren, Borsäure, selenige Säure, Salpetersäure, Essigsäure, Propionsäure, Halogenessigsäuren, wie Trichlor- oder Trifluoressigsäure, Oxalsäure, p-Toluolsulfonsäure, saure Ionenaustauscher, saure Zeolithe, säureaktivierte Bleicherde, Fluorwasserstoff, Chlorwasserstoff und reaktivierter Ruß.

Falls bei dem erfindungsgemäßen Verfahren (1) Katalysator eingesetzt wird, handelt es sich vorzugsweise um Mengen von 5 bis 100 Gewichtsprozent, besonders bevorzugt von 10 bis 50 Gewichtsprozent, jeweils bezogen auf das Gesamtgewicht an Silicat der Formel (IV).

Das erfindungsgemäße Verfahren (1) wird bei Temperaturen von vorzugsweise -10 °C bis 70 °C, insbesondere von 0 °C bis 40 °C, und einem Druck von vorzugsweise 800 bis 2000 hPa, besonders bevorzugt 900 bis 1500 hPa, durchgeführt.

Das Verfahren (1) kann in Anwesenheit oder in Abwesenheit von Lösungsmitteln durchgeführt werden, wobei es vorzugsweise in Anwesenheit von Lösungsmitteln durchgeführt wird.

Falls Lösungsmittel verwendet werden, sind Lösungsmittel oder Lösungsmittelgemische mit einem Siedepunkt bzw. Siedebereich von bis zu 120° C bei 1000 hPa bevorzugt.

Beispiele für solche Lösungsmittel sind Wasser, Alkohole, wie Methanol, Ethanol, n-Propanol und iso-Propanol, Ether, wie Dioxan, Tetrahydrofuran, Diethylether und Diethylenglycoldimethylether, chlorierte Kohlenwasserstoffe, wie Dichlormethan, Trichlormethan, Tetrachlormethan, 1,2-Dichlorethan und Trichlorethylen, Kohlenwasserstoffe, wie Pentan, n-Hexan, Hexan-Isomerengemische, Heptan, Oktan, Waschbenzin, Petrolether, Benzol, Toluol und Xylole, Ketone, wie Aceton, Methylethylketon und Methyl-isobutylketon, Schwefelkohlenstoff und Nitrobenzol, oder Gemische dieser Lösungsmittel, wobei protische Lösungsmittel, wie Wasser, Alkohole, wie Methanol, Ethanol, n-Propanol und iso-Propanol, sowie protische Lösungsmittel enthaltende Gemische besonders bevorzugt sind.

Falls bei dem erfindungsgemäßen Verfahren (1) Lösungsmittel eingesetzt wird, handelt es sich vorzugsweise um Mengen von 200 bis 3000 Gewichtsprozent, besonders bevorzugt von 400 bis 2000 Gewichtsprozent, jeweils bezogen auf das Gesamtgewicht an Silicat der Formel (IV).

Vorzugsweise wird bei dem erfindungsgemäßen Verfahren (1) ein Gemisch aus Verbindung (A), Verbindung (B), gegebenenfalls Katalysator und gegebenenfalls Lösungsmittel mit Silicat der Formel (IV) versetzt und für die gewünschte Reaktionszeit gerührt. Durch Wasserzugabe werden die Phasen getrennt, die siliciumorganische Phase wird neutral mit Wasser gewaschen und destillativ von niedrigsiedenden Bestandteilen befreit.

Bei dem erfindungsgemäßen Verfahren (1) wird Komponente (A) vorzugsweise im molaren Verhältnis bezogen auf die Siliciumatome von 1 bis 30, besonders bevorzugt von 5 bis 20, jeweils bezogen auf die Siliciumatome im Silicat der Formel (IV), eingesetzt.

Bei dem erfindungsgemäßen Verfahren (1) wird Komponente (B) vorzugsweise im molaren Verhältnis bezogen auf die Siliciumatome von 0,5 bis 30, besonders bevorzugt von 5 bis 20, jeweils bezogen auf die Siliciumatome im Silicat der Formel (IV), eingesetzt.

Vorzugsweise handelt es sich bei X um Hydroxylgruppe, Chloratom und Ethoxyrest, wobei Chloratom besonders bevorzugt ist.

Bevorzugt handelt es sich bei Verbindungen der Formel (IV) um (Me₄N⁺)₈[SiO_{5/2}]₈ · 69 H₂O, (Et₄N⁺)₆[SiO_{5/2}]₆ · 57 H₂O und (Bu₄N⁺)₁₀[SiO_{5/2}]₁₀ · 265 H₂O, wobei (Me₄N⁺)₈[SiO_{5/2}]₈ · 69 H₂O besonders bevorzugt ist und Me Methylrest, Et Ethylrest und Bu n-Butylrest bedeutet.

Verbindungen der Formel (IV) sowie deren Herstellungsverfahren sind bereits bekannt. Hierzu sei beispielsweise auf D. Hoebbel, W. Wieker, H. Jancke, G. Engelhard, Z.Chem. 14(3) (1974) 109, I. Hasegawa, S. Sakka, ACS Symp. Ser. 398 (1989) 140, D. Hoebbel, W. Wieker, Z. Allg. Anorg. Chem. 384 (1971) 43-52 und I. Hasegawa, S. Sakka, J. Mol. Liqu. 34 (1987) 307-315 verwiesen.

Bevorzugt handelt es sich bei Verbindungen der Formel (V) und deren Hydrolysate bzw. Kondensate um Trimethylchlorsilan, Dimethylchlorsilan, Vinyldimethylchlorsilan, 3-Chlorpropyldimethylchlorsilan, Trimethylhydroxysilan, Vinyldimethylhydroxysilan, Trimethylethoxysilan, Dimethylmethoxysilan, Vinyldimethylmethoxysilan, Trimethylethoxysilan, Dimethylethoxysilan, Vinyldimethylethoxysilan, Allyldimethylchlorsilan, Hexamethyldisiloxan, 1,1,3,3-Tetramethyldisiloxan, 1,3-Divinyltetramethyldisiloxan und 1,3-Bis(3-chlorpropyl)tetramethyldisiloxan, wobei Trimethylchlorsilan, Dimethylchlorsilan, Vinyldimethylchlorsilan, 3-Chlorpropyldimethylchlorsilan, Hexamethyldisiloxan, 1,1,3,3-Tetramethyldisiloxan, 1,3-Divinyltetramethyldisiloxan, 1,3-Bis(3-chlorpropyl)tetramethyldisiloxan besonders bevorzugt sind.

Bevorzugt handelt es sich bei den Verbindungen der Formel (VI) um Hexamethylcyclotrisiloxan, 1,3,5-Trimethylcyclotrisiloxan, Octamethylcyclotetrasiloxan, 1,3,5,7-Tetramethylcyclotetrasiloxan, 1,3,5,7-Tetravinyltetramethylcyclotetrasiloxan und 1,3,5,7-Tetra(3,3,3-trifluorpropyl)tetramethylcyclotetrasiloxan, wobei Octamethylcyclotetrasiloxan besonders bevorzugt ist.

Bevorzugt handelt es sich bei den Verbindungen der Formel (VII) um Dimethyldichlorsilan, Methyldichlorsilan, Vinylmethyldichlorsilan, Dimethyldimethoxysilan, Methyldimethoxysilan, Vinylmethyldimethoxysilan, Dimethyldiethoxysilan, Methyldiethoxysilan und Vinylmethyldiethoxysilan, wobei Dimethyldichlorsilan besonders bevorzugt ist.

Bevorzugt handelt es sich bei den Verbindungen der Formel (VIII) um α,ω-Dihydroxy-polyphenylmethylsiloxane, α,ω-Dihydroxy-polydiphenylsiloxane, α-Trimethylsiloxy-ω-hydroxy-polydimethylsiloxane, α-Vinyldimethylsiloxy-ω-hydroxy-polydimethylsiloxane, α,ω-Dihydroxy-polydimethylsiloxane, α,ω-Di(dimethyl-3-chlorpropylsiloxy)polydimethylsiloxane, α,ω-Di(trimethylsiloxy)polydimethylsiloxane, α,ω-Di(dimethylHsiloxy)polydimethylsiloxane, α,ω-Di(dimethylvinylsiloxy)polydimethylsiloxane, α,ω-Dihydroxy-polyvinylmethylsiloxane, α,ω-Di(trimethylsiloxy)polyvinylmethylsiloxane, α,ω-Di(dimethylvinylsiloxy)polyvinylmethylsiloxane, α,ω-Dihydroxy-poly(vinylmethyl/dimethyl)siloxane, α,ω-Di(trimethylsiloxy)poly(vinylmethyl/dimethyl)siloxane, α,ω-Di(dimethylvinylsiloxy)poly(vinylmethyl/dimethyl)siloxane, α,ω-Di(dimethylHsiloxy)polymethylHsiloxane, α,ω-Di(trimethylsiloxy)polymethylHsiloxane, α,ω-Di(trimethylsiloxy)poly(methylH/dimethyl)siloxane, und α,ω-Di(dimethylHsiloxy)poly(methylH/dimethyl)siloxane, wobei
α,ω-Dihydroxy-polydimethylsiloxane, α,ω-Di(trimethylsiloxy)polydimethylsiloxane, α,ω-Di(dimethylHsiloxy)polydimethylsiloxane, α,ω-Di(dimethylvinylsiloxy)polydimethylsiloxane, α,ω-Dihydroxy-polyvinylmethylsiloxane, α,ω-Di(trimethylsiloxy)polyvinylmethylsiloxane, α,ω-Di(dimethylvinylsiloxy)polyvinylmethylsiloxane, α,ω-Dihydroxy-poly(vinylmethyl/dimethyl)siloxane, α,ω-Di(trimethylsiloxy)poly(vinylmethyl/dimethyl)siloxane, α,ω-Di(dimethylvinylsiloxy)poly(vinylmethyl/dimethylsiloxane, α,ω-Di(dimethylHsiloxy)polymethylHsiloxane, α,ω-Di(trimethylsiloxy)polymethylHsiloxane, α,ω-Di(trimethylsiloxy)poly(methylH/dimethyl)siloxane, α,ω-Di(dimethylHsiloxy)poly(methylH/dimethyl)siloxane besonders bevorzugt sind.

Vorzugsweise haben die Verbindungen der Formel (VIII) bzw. deren Gemische bei 25°C eine Viskosität von 0,5 bis 400 mPa·s.

Das erfindungsgemäße Verfahren (1) hat den Vorteil, daß auf einfache Weise und mit einer hohen Reaktionsgeschwindigkeit die erfindungsgemäßen Organosiliciumverbindungen hergestellt werden können. Das erfindungsgemäße Verfahren (1) hat zudem den Vorteil, daß es als Einstufen-Synthese ohne bedeutende Nebenreaktionen abläuft. Des weiteren hat es den Vorteil, daß die Edukte leicht verfügbar sind.

### Verfahren (2)

Ein weiterer Gegenstand der vorliegenden Erfindung ist ein Verfahren zur Herstellung der Organosiliciumverbindungen der Formel (I), dadurch gekennzeichnet, daß Organosiliciumverbindungen der Formel

(R⁹₃SiOSiO_{3/2}]_{z} (IX),

worin
- R⁹: gleich oder verschieden sein kann und eine für R² angegebene Bedeutung hat und
- z: die in Formel (I) angegebene Bedeutung hat,
mit mindestens einer Organosiliciumverbindung (B), ausgewählt aus der Gruppe bestehend aus Verbindungen der Formel (VI), (VII) und (VIII) sowie
gegebenenfalls mindestens einer Verbindung (A) der Formel (V) und/oder deren Hydrolysat bzw. Kondensat
umgesetzt wird.

Vorzugsweise wird bei dem erfindungsgemäßen Verfahren (2) Verbindung (A) der Formel (V) und/oder deren Hydrolysat bzw. Kondensat eingesetzt.

Beispiele, bevorzugte bzw. besonders bevorzugte Verbindungen der Formel (V) sind die oben unter Verfahren (1) angegebenen.

Beispiele, bevorzugte bzw. besonders bevorzugte Verbindungen der Formel (VI) sind die oben unter Verfahren (1) angegebenen.

Beispiele, bevorzugte bzw. besonders bevorzugte Verbindungen der Formel (VII) sind die oben unter Verfahren (1) angegebenen.

Beispiele, bevorzugte bzw. besonders bevorzugte Verbindungen der Formel (VIII) sind die oben unter Verfahren (1) angegebenen.

Bevorzugt handelt es sich bei den Verbindungen der Formel (IX) um (Me₃SiOSiO_{3/2})₆, (Me₃SiOSiO_{3/2})₈, (Me₃SiOSiO_{3/2})₁₀, (HMe₂SiOSiO_{3/2})₆, (HMe₂SiOSiO_{3/2})₈, (HMe₂SiOSiO_{3/2})₁₀, (ViMe₂SiOSiO_{3/2})₆, (ViMe₂SiOSiO_{3/2})₈, (ViMe₂SiOSiO_{3/2})₁₀, (ClCH₂CH₂CH₂Me₂SiOSiO_{3/2})₆, (ClCH₂CH₂CH₂Me₂SiOSiO_{3/2})₈ und (ClCH₂CH₂CH₂Me₂SiOSiO_{3/2})₁₀, wobei (Me₃SiOSiO_{3/2})₈, (HMe₂SiOSiO_{3/2})₈ und (ViMe₂SiOSiO_{3/2})₈ besonders bevorzugt sind und Me gleich Methylrest sowie Vi gleich Vinylrest bedeutet.

Verfahren zur Herstellung von Verbindungen der Formel (IX) sind bereits bekannt. Hierzu sei beispielsweise auf die bereits erwähnte DE 38 37 397 A1 sowie EP 348 705 (D. Hoebbel; ausgegeben am 3. Januar 1990) verwiesen.

Als Komponente (B) wird vorzugsweise Verbindung der Formel (VIII) eingesetzt.

Das erfindungsgemäße Verfahren (2) wird vorzugsweise in Anwesenheit von Katalysatoren durchgeführt. Die für das erfindungsgemäße Verfahren (1) angegebenen Beispiele für Katalysatoren gelten in vollem Umfang auch für das erfindungsgemäße Verfahren (2).

Bevorzugt werden im erfindungsgemäßen Verfahren (2) als Katalysator Phosphornitrilchloride, Salzsäure, saure Ionenaustauscher, saure Zeolithe und säureaktivierte Bleicherde eingesetzt, wobei Phosphornitrilchloride besonders bevorzugt sind.

Falls bei dem erfindungsgemäßen Verfahren (2) Katalysator eingesetzt wird, handelt es sich vorzugsweise um Mengen von 0,1 bis 20 Gewichtsprozent, besonders bevorzugt um 0,3 bis 10 Gewichtsprozent, jeweils bezogen auf das Gesamtgewicht an Organosiliciumverbindung der Formel (IX).

Das erfindungsgemäße Verfahren (2) wird bei Temperaturen von vorzugsweise -20 °C bis 200°C, insbesondere von 20°C bis 100 °C, und einem Druck von vorzugsweise 800 bis 2000 hPa, besonders bevorzugt 900 bis 1500 hPa, durchgeführt.

Das Verfahren (2) kann in Anwesenheit oder in Abwesenheit von Lösungsmitteln durchgeführt werden, wobei es vorzugsweise in Anwesenheit von Lösungsmitteln durchgeführt wird.

Beispiele für im erfindungsgemäßen Verfahren (2) gegebenenfalls eingesetzte Lösungsmittel sind die für das Verfahren (1) angegebenen Beispiele für Lösungsmittel.

Falls bei dem erfindungsgemäßen Verfahren (2) Lösungsmittel eingesetzt wird, handelt es sich vorzugsweise um Mengen von 200 bis 3000 Gewichtsprozent, besonders bevorzugt von 400 bis 2000 Gewichtsprozent, jeweils bezogen auf das Gesamtgewicht an Organosiliciumverbindung der Formel (IX).

Vorzugsweise werden bei dem erfindungsgemäßen Verfahren (2) alle Komponenten in beliebiger Reihenfolge miteinander vermischt und für die gewünschte Reaktionszeit gerührt. Anschließend wird gegebenenfalls Katalysator mit basischer Verbindung, wie etwa Magnesiumoxid, desaktiviert und, falls Lösungsmittel eingesetzt wurde, durch Wasserzugabe die Phasen getrennt. Die siliciumorganische Phase wird neutral mit Wasser gewaschen und destillativ von niedrigsiedenden Bestandteilen befreit.

Bei dem erfindungsgemäßen Verfahren (2) wird Komponente (A) vorzugsweise im molaren Verhältnis bezogen auf Siliciumatome von 1 bis 30, besonders bevorzugt von 5 bis 20, jeweils bezogen auf die Siliciumatome in den SiO_{3/2}-Einheiten der Organosiliciumverbindung der Formel (IX), eingesetzt.

Bei dem erfindungsgemäßen Verfahren (2) wird Komponente (B) vorzugsweise im molaren Verhältnis bezogen auf Siliciumatome von 1 bis 30, besonders bevorzugt von 5 bis 20, jeweils bezogen auf die Siliciumatome in den SiO_{3/2}-Einheiten der Organosiliciumverbindung der Formel (IX), eingesetzt.

Das erfindungsgemäße Verfahren (2) hat den Vorteil, daß die erfindungsgemäßen Verbindungen einfach und mit einer großen Reinheit hergestellt werden können. Die erfindungsgemäße Reaktion ist leicht zu steuern und verläuft selektiv.

### Verfahren (3)

Ein weiterer Gegenstand der vorliegenden Erfindung ist ein Verfahren zur Herstellung der Organosiliciumverbindungen der Formel (I), dadurch gekennzeichnet, daß Organosiliciumverbindungen der Formel

(HR¹⁰₂SiOSiO_{3/2})_{f} (R¹⁰₃SiOSiO_{3/2})_{z-f} (X),

worin
- R¹⁰: gleich oder verschieden sein kann und eine für R² angegebene Bedeutung hat,
- z: die in Formel (I) angegebene Bedeutung hat und
- f: eine ganze Zahl von 1 bis z bedeutet,
in einer 1. Stufe mit Allylchlorid in Gegenwart von Platinmetallen und/oder deren Verbindungen zu den entsprechenden Chlorverbindungen der Formel 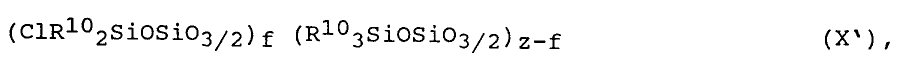
wobei R¹⁰, f und z die obengenannte Bedeutung haben, umgesetzt wird und anschließend in einer 2. Stufe Verbindungen der Formel (X 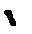 ) mit mindestens einer Organosiliciumverbindung (C), ausgewählt aus der Gruppe bestehend aus Silanen der Formel

R¹¹₃SiOH (XI),

worin R¹¹ gleich oder verschieden sein kann und eine für R² angegebene Bedeutung hat,
Organopolysiloxanen der Formel

R¹²₃SiO(SiR¹²₂O)ᵣSiR¹²₂OH (XII),

worin R¹² gleich oder verschieden sein kann und eine für R² angegebene Bedeutung hat und r 0 oder eine ganze Zahl von 1 bis 10 bedeutet,
Organopolysiloxanen der Formel

(R¹²₃SiO(SiR¹²₂O)ᵣ)₂SiR¹²OH (XIII),

worin R¹² und r die oben angegebene Bedeutung haben, und Organopolysiloxanen der Formel

(R¹²₃SiO(SiR¹²₂O)ᵣ)₃SiOH (XIV),

worin R¹² und r die oben angegebene Bedeutung haben, umgesetzt werden.

Bei den Verbindungen der Formel (XI) handelt es sich bevorzugt um die oben für Verbindung der Formel (V) genannten Hydroxysilane, wobei Trimethylhydroxysilan und Vinyldimethylhydroxysilan besonders bevorzugt sind.

Bevorzugt handelt es sich bei den Organopolysiloxanen der Formel (XII) um die für Verbindungen der Formel (VIII) angegebenen Siloxane mit einer Si-gebundenen Hydroxygruppe, besonders bevorzugt um Hydroxy-pentamethyldisiloxan, 1-Hydroxy-3-vinyl-tetramethyldisiloxan, 1-Hydroxy-3-hydrogen-tetramethyldisiloxan und 1-Hydroxy-7-vinyl-octamethyltetrasiloxan.

Bevorzugt handelt es sich bei den Organopolysiloxanen der Formel (XIII) um Bis(trimethylsiloxy)methylhydroxysilan, Bis(dimethylsiloxy)methylhydroxysilan und Bis(vinyldimethylsiloxy)methylhydroxysilan, wobei Bis(vinyldimethylsiloxy)methylhydroxysilan besonders bevorzugt ist.

Bevorzugt handelt es sich bei den Organopolysiloxanen der Formel (XIV) um Tris(trimethylsiloxy)hydroxysilan, Tris(dimethylsiloxy)hydroxysilan und Tris(vinyldimethylsiloxy)hydroxysilan, wobei Tris(vinyldimethylsiloxy)hydroxysilan besonders bevorzugt ist.

Als Verbindung (C) wird vorzugsweise Organopolysiloxane der Formel (XIV) eingesetzt.

Das erfindungsgemäße Verfahren (3) wird vorzugsweise unter Schutzgas, wie etwa Stickstoff oder Argon, durchgeführt.

Verfahren zur Herstellung von Verbindungen der Formel (IX) sind bereits bekannt. Hierzu sei beispielsweise auf die bereits erwähnte DE 38 37 397 A1 (Wacker-Chemie GmbH; ausgegeben am 10. Mai 1990) bzw. die entsprechende US 5,047,492 (ausgegeben am 10. September 1991) sowie EP 348 705 (D. Hoebbel; ausgegeben am 3. Januar 1990) verwiesen.

Beispiele für die in der 1. Stufe des erfindungsgemäßen Verfahrens (3) eingesetzten Platinmetalle und/oder deren Verbindungen sind feinstverteilte Platinmetalle, wie Platin, Palladium, Rhodium und Iridium, Platinmetalle auf Träger, wie Siliciumdioxid, Aluminiumoxid oder Aktivkohle, gebunden sowie in Kohlenwasserstoffen lösliche Komplexe von Platinmetallen, wie PtCl₄, NaPtCl₄·4H₂O, Platin-Olefin-Komplexe, Platin-Alkohol-Komplexe, Platin-Alkoholat-Komplexe, Platin-Ether-komplexe, Platin-Aldehyd-Komplexe, Platin-Keton-Komplexe, Platin-Vinylsiloxan-Komplexe und Dicyclopentadienplatindichlorid, wobei Palladium/Aktivkohle, Palladiumdiacetylacetonat und Tris(triphenylphosphin)rhodium(I)chlorid bevorzugt und Palladium/Aktivkohle besonders bevorzugt sind.

Platinkatalysator wird vorzugsweise in Mengen von 50 bis 400 Gewichts-ppm (Gewichtsteilen je Million Gewichtsteilen), insbesondere von 100 bis 300 Gewichts-ppm, jeweils berechnet als elementares Platinmetall und bezogen auf das Gesamtgewicht der Organosiliciumverbindung der Formel (X), eingesetzt.

Allylchlorid wird vorzugsweise im molaren Verhältnis von 1,0 bis 5, insbesondere 1,0 bis 2, jeweils bezogen auf das Mol Si-gebundenen Wasserstoff in der Organosiliciumverbindung der Formel (X), eingesetzt.

Die 1. Stufe des Verfahrens (3) kann in Anwesenheit oder in Abwesenheit von Lösungsmitteln durchgeführt werden, wobei es vorzugsweise in Anwesenheit von Lösungsmitteln durchgeführt wird.

Beispiele für die in der 1. Stufe des erfindungsgemäßen Verfahrens (3) gegebenenfalls eingesetzten Lösungsmittel sind die für das Verfahren (1) angegebenen Beispiele für Lösungsmittel, wobei aprotische Lösungsmittel oder Lösungsmittelgemische mit einem Siedepunkt von bis zu 120°C bei einem Druck von 1000 hPa bevorzugt sind.

Falls bei der 1. Stufe des erfindungsgemäßen Verfahrens (3) Lösungsmittel eingesetzt wird, handelt es sich vorzugsweise um Mengen von 100 bis 2000 Gewichtsprozent, besonders bevorzugt von 200 bis 1000 Gewichtsprozent, jeweils bezogen auf das Gesamtgewicht an Organosiliciumverbindung der Formel (X).

Die 1. Stufe des erfindungsgemäße Verfahren (3) wird bei Temperaturen von vorzugsweise 20 °C bis 50°C, insbesondere bei der Siedetemperatur von Allylchlorid (45°C), und einem Druck von vorzugsweise 800 bis 2000 hPa, besonders bevorzugt 900 bis 1500 hPa, durchgeführt.

Im Anschluß an die 1. Stufe wird Verbindung der Formel (X 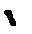 ) in einer 2. Stufe vorzugsweise unter weitgehendem Ausschluß von Feuchtigkeit gegebenenfalls in Anwesenheit von Säurefänger mit Verbindung (C) umgesetzt.

Bei der 2. Stufe des erfindungsgemäßen Verfahrens (3) wird Komponente (C) vorzugsweise im molaren Verhältnis bezogen auf Si-gebundene Hydroxylgruppen von 1,0 bis 1,5, besonders bevorzugt von 1,0 bis 1,2, jeweils bezogen auf das Mol Si-gebundenes Chloratom in der Organosiliciumverbindung der Formel (X 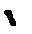 ), eingesetzt.

Als Säurefänger können basischen Stickstoff aufweisende Verbindungen, wie primäre, sekundäre und tertiäre Amine und Harnstoffderivate, eingesetzt werden. Bevorzugt handelt es sich bei dem eingesetzten Säurefänger um Triethylamin, Pyridin, 1,9-Diazabicyclo[5.4.0]undecen-7 (DBU), 1,5-Diazabicyclo[3.3.0]octan (DABCO), Harnstoff, Tetramethylharnstoff, N,N 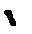 -Dimethylharnstoff, N,N 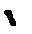 -Dimethylpropylenharnstoff (DMPH) und Bis(trimethylsilyl)harnstoff (BSU), wobei Triethylamin, Pyridin und Tetramethylharnstoff besonders bevorzugt sind.

Falls bei der 2. Stufe des erfindungsgemäßen Verfahrens (3) Säurefänger eingesetzt wird, handelt es sich vorzugsweise um molare Verhältnisse von 1,0 bis 1,1, besonders bevorzugt um 1,0, jeweils bezogen auf das Mol Si-gebundene Chloratome in der Organosiliciumverbindung der Formel (X 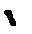 ).

Die 2. Stufe des Verfahrens (3) kann in Anwesenheit oder in Abwesenheit von Lösungsmitteln durchgeführt werden, wobei es vorzugsweise in Anwesenheit von Lösungsmitteln durchgeführt wird.

Beispiele für die in der 2. Stufe des erfindungsgemäßen Verfahrens (3) gegebenenfalls eingesetzten Lösungsmittel sind die für die 1. Stufe oben angegebenen Beispiele.

Falls bei der 2. Stufe des erfindungsgemäßen Verfahrens (3) Lösungsmittel eingesetzt wird, handelt es sich vorzugsweise um Mengen von 200 bis 3000 Gewichtsprozent, besonders bevorzugt von 500 bis 2000 Gewichtsprozent, jeweils bezogen auf das Gesamtgewicht an Organosiliciumverbindung der Formel (X 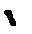 ).

Die 2. Stufe des erfindungsgemäßen Verfahrens (3) wird bei Temperaturen von vorzugsweise 20 °C bis 120°C, insbesondere von 30°C bis 60 °C, und einem Druck von vorzugsweise 800 bis 2000 hPa, besonders bevorzugt 900 bis 1500 hPa, durchgeführt.

Bei einer bevorzugten Ausführungsform des erfindungsgemäßen Verfahrens (3) wird Allylchlorid unter Schutzgas zu einem Gemisch aus Verbindung der Formel (X), Katalysator und gegebenenfalls Lösungsmittel getropft und gerührt. Nach Beendigung der 1. Stufe wird die Reaktionsmischung unter Schutzgas zu Verbindung (C) im Gemisch mit Säurefänger und Lösungsmittel gegeben und gerührt. Nach Beendigung der 2. Stufe werden Katalysator und die organischen Chloride abgetrennt. Das Produkt wird destillativ von Lösungsmittel befreit.

Das erfindungsgemäße Verfahren (3) hat den Vorteil, daß die erfindungsgemäß hergestellte Verbindung der Formel (I) genau definiert ist und kein Gemisch aus verschiedenen Verbindungen der Formel (I) darstellt. Des weiteren hat das erfindungsgemäße Verfahren (3) den Vorteil, daß damit erfindungsgemäße Verbindungen der Formel (I) hergestellt werden können, die eine äußerst hohe Dichte an organofunktionellen Resten, wie etwa R¹, R², R³ und R⁴, in Gruppen der Formel (II) aufweisen.

### Verfahren (4)

Ein weiterer Gegenstand der vorliegenden Erfindung ist ein Verfahren zur Herstellung der Organosiliciumverbindungen der Formel (I), dadurch gekennzeichnet, daß Organosiliciumverbindungen der Formel (X)
in einer 1. Stufe mit Wasser in Gegenwart von Platinmetallen und/oder deren Verbindungen zu den entsprechenden Hydroxyverbindungen der Formel 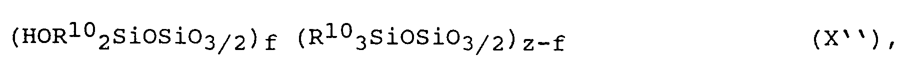
wobei R¹⁰, f und z die obengenannte Bedeutung haben, umgesetzt wird und anschließend in einer 2. Stufe Verbindungen der Formel (X 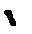 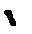 ) mit mindestens einer Organosiliciumverbindung (C), ausgewählt aus der Gruppe bestehend aus Silanen der Formel 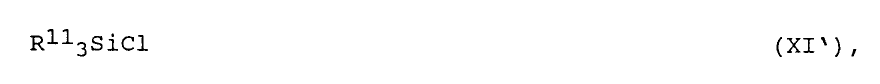
worin R¹¹ gleich oder verschieden sein kann und eine für R² angegebene Bedeutung hat,
Organopolysiloxanen der Formel 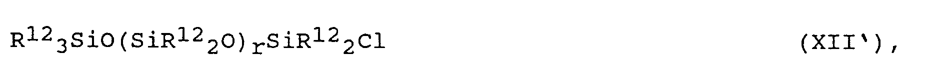
worin R¹² gleich oder verschieden sein kann und eine für R² angegebene Bedeutung hat und r 0 oder eine ganze Zahl von 1 bis 10 bedeutet,
Organopolysiloxanen der Formel 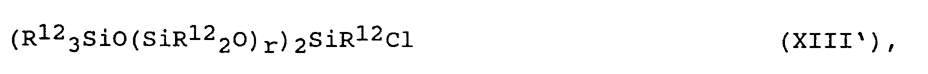
worin R¹² und r die oben angegebene Bedeutung haben, und Organopolysiloxanen der Formel 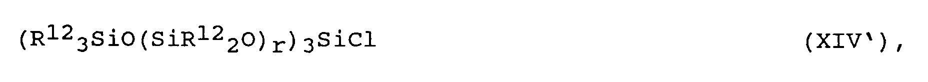
worin R¹² und r die oben angegebene Bedeutung haben, umgesetzt werden.

Bei den Verbindungen der Formel (XI 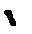 ) handelt es sich bevorzugt um die oben für Verbindung der Formel (V) genannten Chlorsilane, wobei Trimethylchlorsilan, Dimethylchlorsilan, Vinyldimethylchlorsilan und 3-Chlorpropyl-dimethylchlorsilan besonders bevorzugt sind.

Bevorzugt handelt es sich bei den Organopolysiloxanen der Formel (XII 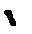 ) um die für Verbindungen der Formel (VIII) angegebenen Siloxane mit einem Si-gebundenen Chloratom, besonders bevorzugt um Chlor-pentamethyldisiloxan, 1-Chlor-3-vinyl-tetramethyldisiloxan, 1-Chlor-3-hydrogen-tetramethyldisiloxan und 1-Chlor-7-vinyl-octamethyltetrasiloxan.

Bevorzugt handelt es sich bei den Organopolysiloxanen der Formel (XIII 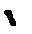 ) um Bis(trimethylsiloxy)methylchlorsilan, Bis(dimethylsiloxy)methylchlorsilan und Bis(vinyldimethylsiloxy)methylchlorsilan, wobei Bis(vinyldimethylsiloxy)methylchlorsilan besonders bevorzugt ist.

Bevorzugt handelt es sich bei den Organopolysiloxanen der Formel (XIV 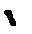 ) um Tris(trimethylsiloxy)chlorsilan, Tris(dimethylsiloxy)chlorsilan und Tris(vinyldimethylsiloxy)chlorsilan, wobei Tris(vinyldimethylsiloxy)chlorsilan besonders bevorzugt ist.

Als Verbindung (C) werden vorzugsweise Organosiliciumverbindungen der Formel (XI 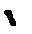 ), (XII 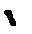 ) und (XIV 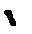 ), besonders bevorzugt Verbindungen der Formel (XIV 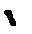 ) eingesetzt.

Das erfindungsgemäße Verfahren (4) wird vorzugsweise unter Schutzgas, wie etwa Stickstoff oder Argon, durchgeführt.

Beispiele für die in der 1. Stufe des erfindungegemäßen Verfahrens (4) eingesetzten Platinmetalle und/oder deren Verbindungen sind sind die in Verfahren (3) angegebenen Beispiele, wobei Palladium/Aktivkohle, Platin-Olefin-Komplexe, wie solche mit 1-Octen, Cyclopentadien und Norbornadien, und Platin-Vinylsiloxan-Komplexe, wie solche mit Divinyltetramethyldisiloxan, bevorzugt und Palladium/Aktivkohle besonders bevorzugt sind.

Platinkatalysator wird vorzugsweise in Mengen von 50 bis 400 Gewichts-ppm (Gewichtsteilen je Million Gewichtsteilen), insbesondere von 100 bis 300 Gewichts-ppm, jeweils berechnet als elementares Platinmetall und bezogen auf das Gesamtgewicht der Organosiliciumverbindung der Formel (X), eingesetzt.

Wasser wird vorzugsweise in molaren Verhältnissen von 1,0 bis 1,3, insbesondere 1,0 bis 1,1, jeweils bezogen auf das Mol Si-gebundenen Wasserstoff in der Organosiliciumverbindung der Formel (X), eingesetzt.

Die 1. Stufe des Verfahrens (4) kann in Anwesenheit oder in Abwesenheit von Lösungsmitteln durchgeführt werden, wobei es vorzugsweise in Anwesenheit von Lösungsmitteln durchgeführt wird.

Beispiele für die in der 1. Stufe des erfindungsgemäßen Verfahrens (4) gegebenenfalls eingesetzten Lösungsmittel sind die für das Verfahren (3) angegebenen Beispiele für Lösungsmittel, wobei polar-aprotische Lösungsmittel oder Lösungsmittelgemische mit einem Siedepunkt von bis zu 120°C bei einem Druck von 1000 hPa bevorzugt sind.

Falls bei der 1. Stufe des erfindungsgemäßen Verfahrens (4) Lösungsmittel eingesetzt wird, handelt es sich vorzugsweise um Mengen von 100 bis 2000 Gewichtsprozent, besonders bevorzugt von 200 bis 1000 Gewichtsprozent, jeweils bezogen auf das Gesamtgewicht an Organosiliciumverbindung der Formel (X).

Die 1. Stufe des erfindungsgemäßen Verfahrens (4) wird bei Temperaturen von vorzugsweise 20 °C bis 100°C, insbesondere von 40°C bis 80 °C, und einem Druck von vorzugsweise 800 bis 2000 hPa, besonders bevorzugt 900 bis 1500 hPa, durchgeführt.

Im Anschluß an die 1. Stufe wird Verbindung der Formel (X 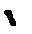 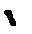 ) in einer 2. Stufe gegebenenfalls in Anwesenheit von Säurefänger mit Verbindung (C) umgesetzt, wobei diese 2. Stufe vorzugsweise so durchgeführt wird, daß keine Feuchtigkeit zutritt.

Bei der 2. Stufe des erfindungsgemäßen Verfahrens (4) wird Komponente (C) vorzugsweise in molaren Verhältnissen von 1,0 bis 1,5, besonders bevorzugt von 1,0 bis 1,2, jeweils bezogen auf das Mol Si-gebundene Hydroxylgruppen in der Organosiliciumverbindung der Formel (X 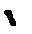 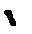 ), eingesetzt.

Bei den Säurefängern handelt es sich um die oben in Verfahren (3) beschriebenen Säurefängern.

Falls bei der 2. Stufe des erfindungsgemäßen Verfahrens (4) Säurefänger eingesetzt wird, handelt es sich vorzugsweise um molare Verhältnisse von 1,0 bis 1,1, besonders bevorzugt um 1,0, jeweils bezogen auf das Mol Si-gebundene Chloratome in der Organosiliciumverbindung der Formel (X 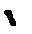 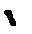 ).

Die 2. Stufe des Verfahrens (4) kann in Anwesenheit oder in Abwesenheit von Lösungsmitteln durchgeführt werden, wobei es vorzugsweise in Anwesenheit von Lösungsmitteln durchgeführt wird.

Beispiele für die in der 2. Stufe des erfindungsgemäßen Verfahrens (4) gegebenenfalls eingesetzten Lösungsmittel sind die für die 1. Stufe des Verfahrens (3) oben angegebenen Beispiele.

Falls bei der 2. Stufe des erfindungsgemäßen Verfahrens (4) Lösungsmittel eingesetzt wird, handelt es sich vorzugsweise um Mengen von 200 bis 3000 Gewichtsprozent, besonders bevorzugt von 500 bis 2000 Gewichtsprozent, jeweils bezogen auf das Gesamtgewicht an Organosiliciumverbindung der Formel (X 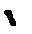 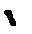 ).

Die 2. Stufe des erfindungsgemäße Verfahren (4) wird bei Temperaturen von vorzugsweise 20 °C bis 120°C, insbesondere von 30°C bis 60 °C, und einem Druck von vorzugsweise 800 bis 2000 hPa, besonders bevorzugt 900 bis 1500 hPa, durchgeführt.

Bei einer bevorzugten Ausführungsform des erfindungsgemäßen Verfahrens (4) wird Verbindung der Formel (X), Wasser, Katalysator und gegebenenfalls Lösungsmittel unter Schutzgas miteinander verrührt. Nach Beendigung der 1. Stufe wird die Reaktionsmischung unter Schutzgas zu Verbindung (C) im Gemisch mit Säurefänger und Lösungsmittel gegeben und gerührt. Nach Beendigung der 2. Stufe werden Katalysator und die organischen Chloride abgetrennt. Das Produkt wird destillativ von Lösungsmittel befreit.

Das erfindungsgemäße Verfahren (4) hat den Vorteil, daß die erfindungsgemäß hergestellte Verbindung der Formel (I) genau definiert ist und kein Gemisch aus verschiedenen Verbindungen der Formel (I) darstellt. Des weiteren hat das erfindungsgemäße Verfahren (4) den Vorteil, daß damit erfindungsgemäße Verbindungen der Formel (I) hergestellt werden können, die eine äußerst hohe Dichte an organofunktionellen Resten, wie etwa R¹, R², R³ und R⁴, in Gruppen der Formel (II) aufweisen.

Die erfindungsgemäßen Organosiliciumverbindungen bzw. die erfindungsgemäß hergestellten Organosiliciumverbindungen können für alle Zwecke eingesetzt werden, für die auch bisher Organosiliciumverbindungen mit käfigartiger Struktur verwendet wurden. Insbesondere eignen sie sich als Vernetzer in Siliconkautschukmassen und -harzen, als Initiatoren für Polymerisationen, als Weichmacher, Füllstoffe, Trennmittel, Haftvermittler, allgemein als grenzflächenaktive Stoffe für Polymere, aufgrund ihrer guten Löslichkeit insbesondere für Organopolysiloxane, sowie als Standard für spektroskopische und chromatographische Analysenmethoden.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25° C. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im folgenden werden als Abkürzungen verwendet:
Me für den Methylrest
Vi für den Vinylrest

### Beispiel 1

10 g eines feuchten Silicats der Formel (Me₄N⁺)₈[SiO_{5/2}]₈· 69 H₂O (entspricht 6 g Octasilicat und 4 g Wasser) werden portionsweise zu einem gut gerührten Gemisch aus 100 ml Isopropanol, 70 ml Toluol, 8,9 ml Trimethylchlorsilan und 23 ml Dimethyldichlorsilan bei einer Temperatur von 0°C gegeben und für eine Stunde gerührt. Anschließend werden weitere 17,8 ml Trimethylchlorsilan bei einer Temperatur von 0°C zugegeben und 20 Minuten gerührt. Dann wird mit Eiswasser das überschüssige Silan hydrolysiert und die Phasen getrennt. Die organische Phase wird bis zur Neutralität gewaschen, über Na₂SO₄ getrocknet und das Lösungsmittel sowie niedrigsiedende Siloxane bei einer Temperatur von 180°C und 1 Pa destillativ entfernt. Es werden 4,4 g einer zähviskosen Substanz mit einer gemäß GPC-Diagramm sehr schmalen Molmassenverteilung und der Struktur

[Me₃SiO(SiMe₂O)ₙSiO_{3/2}]₈

erhalten, wobei n durchschnittlich 1,4 ist.

### Beispiel 2

10 g eines feuchten Silicats der Formel (Me₄N⁺)₈[SiO_{5/2}]₈· 69 H₂O (entspricht 6 g Octasilicat und 4 g Wasser) werden portionsweise zu einem gut gerührten Gemisch aus 100 ml Isopropanol, 70 ml Toluol, 9,5 ml Vinyldimethylchlorsilan und 23 ml Dimethyldichlorsilan bei einer Temperatur von 0°C gegeben und für eine Stunde gerührt. Anschließend werden weitere 19 ml Vinyldimethylchlorsilan bei einer Temperatur von 0°C zugegeben und 20 Minuten gerührt. Dann wird mit Eiswasser das überschüssige Silan hydrolysiert und die Phasen getrennt. Die organische Phase wird bis zur Neutralität gewaschen, über Na₂SO₄ getrocknet und das Lösungsmittel sowie niedrigsiedende Siloxane bei einer Temperatur von 180°C und 1 Pa destillativ entfernt. Es werden 4,5 g einer zähviskosen Substanz mit einer gemäß GPC-Diagramm sehr schmalen Molmassenverteilung und der Struktur

[ViMe₂SiO(SiMe₂O)ₙSiO_{3/2}]₈

erhalten, wobei n durchschnittlich 1,5 ist.

### Beispiel 3

10 g eines feuchten Silicats der Formel (Me₄N⁺)₈[SiO_{5/2}]₈· 69 H₂O (entspricht 6 g Octasilicat und 4 g Wasser) werden portionsweise zu einem gut gerührten Gemisch aus 7 ml konzentrierter HCl, 100 ml Isopropanol, 70 ml Toluol, 6,2 ml 1,1,3,3-Tetramethyldisiloxan und 14,7 ml Octamethylcyclotetrasiloxan bei einer Temperatur von 0°C gegeben und für eine Stunde gerührt. Anschließend werden weitere 12,4 ml 1,1,3,3-Tetramethyldisiloxan bei einer Temperatur von 0°C zugegeben und 20 Minuten gerührt. Dann wird mit Eiswasser das überschüssige Silan hydrolysiert und die Phasen getrennt. Die organische Phase wird bis zur Neutralität gewaschen, über Na₂SO₄ getrocknet und das Lösungsmittel sowie niedrigsiedende Siloxane bei einer Temperatur von 180°C und 1 Pa destillativ entfernt. Es werden 4,1 g einer zähviskosen Substanz mit einer gemäß GPC-Diagramm sehr schmalen Molmassenverteilung und der Struktur

[HMe₂SiO(SiMe₂O)ₙSiO_{3/2}]₈

erhalten, wobei n durchschnittlich 1,3 ist.

### Beispiel 4

10 g eines feuchten Silicats der Formel (Me₄N⁺)₈[SiO_{5/2}]₈· 69 H₂O (entspricht 6 g Octasilicat und 4 g Wasser) werden portionsweise zu einem gut gerührten Gemisch aus 100 ml Isopropanol, 70 ml Toluol, 9,5 ml Vinyldimethylchlorsilan und 24,6 ml Vinylmethyldichlorsilan bei einer Temperatur von 0°C gegeben und für eine Stunde gerührt. Anschließend werden weitere 19 ml Vinyldimethylchlorsilan bei einer Temperatur von 0°C zugegeben und 20 Minuten gerührt. Dann wird mit Eiswasser das überschüssige Silan hydrolysiert und die Phasen getrennt. Die organische Phase wird bis zur Neutralität gewaschen, über Na₂SO₄ getrocknet und das Lösungsmittel sowie niedrigsiedende Siloxane bei einer Temperatur von 180°C und 1 Pa destillativ entfernt. Es werden 4,8 g einer zähviskosen Substanz mit einer gemäß GPC-Diagramm sehr schmalen Molmassenverteilung und der Struktur

[ViMe₂SiO(SiViMeO)ₙSiO_{3/2}]₈

erhalten, wobei n durchschnittlich 1,6 ist.

### Beispiel 5

10 g eines feuchten Silicats der Formel (Me₄N⁺)₈[SiO_{5/2}]₈· 69 H₂O (entspricht 6 g Octasilicat und 4 g Wasser) werden portionsweise zu einem gut gerührten Gemisch aus 7 ml konzentrierter HCl, 100 ml Isopropanol, 70 ml Toluol, 7,5 ml Hexamethyldisiloxan und 14,7 ml 1,3,5,7-Tetramethylcyclotetrasiloxan bei einer Temperatur von 0°C gegeben und für eine Stunde gerührt. Anschließend werden weitere 14,9 ml Hexamethyldisiloxan bei einer Temperatur von 0°C zugegeben und 20 Minuten gerührt. Dann wird Wasser zugegeben und die Phasen getrennt. Die organische Phase wird bis zur Neutralität gewaschen, über Na₂SO₄ getrocknet und das Lösungsmittel sowie niedrigsiedende Siloxane bei einer Temperatur von 180°C und 1 Pa destillativ entfernt. Es werden 4,1 g einer zähviskosen Substanz mit einer gemäß GPC-Diagramm sehr schmalen Molmassenverteilung und der Struktur

[Me₃SiO(SiHMeO)ₙSiO_{3/2}]₈

erhalten, wobei n durchschnittlich 1,4 ist.

### Beispiel 6

10 g eines feuchten Silicats der Formel (Me₄N⁺)₈[SiO_{5/2}]₈· 69 H₂O (entspricht 6 g Octasilicat und 4 g Wasser) werden portionsweise zu einem gut gerührten Gemisch aus 100 ml Isopropanol, 70 ml Toluol, 11,5 ml 3-chlorpropyldimethylchlorsilan und 23 ml Dimethyldichlorsilan bei einer Temperatur von 0°C gegeben und für eine Stunde gerührt. Anschließend werden weitere 23 ml 3-Chlorpropyldimethylchlorsilan bei einer Temperatur von 0°C zugegeben und 20 Minuten gerührt. Dann wird mit Eiswasser das überschüssige Silan hydrolysiert und die Phasen getrennt. Die organische Phase wird bis zur Neutralität gewaschen, über Na₂SO₄ getrocknet und das Lösungsmittel sowie niedrigsiedende Siloxane bei einer Temperatur von 180°C und 1 Pa destillativ entfernt. Es werden 5,3 g einer zähviskosen Substanz mit einer gemäß GPC-Diagramm sehr schmalen Molmassenverteilung und der Struktur

[ClCH₂CH₂CH₂Me₂SiO(SiMe₂O)ₙSiO_{3/2}]₈

erhalten, wobei n durchschnittlich 1,6 ist.

### Beispiel 7

10 g eines feuchten Silicats der Formel (Me₄N⁺)₈[SiO_{5/2}]₈· 69 H₂O (entspricht 6 g Octasilicat und 4 g Wasser) werden portionsweise zu einem gut gerührten Gemisch aus 100 ml Isopropanol, 70 ml Toluol, 7,6 ml Dimethylhydrogenchlorsilan und 19,8 ml Methylhydrogendichlorsilan bei einer Temperatur von 0°C gegeben und für eine Stunde gerührt. Anschließend werden weitere 15,3 ml Dimethylhydrogenchlorsilan bei einer Temperatur von 0°C zugegeben und 20 Minuten gerührt. Dann wird mit Eiswasser das überschüssige Silan hydrolysiert und die Phasen getrennt. Die organische Phase wird bis zur Neutralität gewaschen, über Na₂SO₄ getrocknet und das Lösungsmittel sowie niedrigsiedende Siloxane bei einer Temperatur von 180°C und 1 Pa destillativ entfernt. Es werden 4,1 g einer zähviskosen Substanz mit einer gemäß GPC-Diagramm sehr schmalen Molmassenverteilung und der Struktur

[HMe₂SiO(SiHMeO)ₙSiO_{3/2}]₈

erhalten, wobei n durchschnittlich 1,2 ist.

### Beispiel 8

2,8 g des Octa(trimethylsiloxy)octasilsesquioxans [(CH₃)₃SiOSiO_{3/2}]₈ werden zusammen mit 1 ml konzentrierter HCl, 5,3 ml Hexamethyldisiloxan und 16,7 ml α,ω-Dihydroxypolyvinylmethylsiloxan mit durchschnittlich 150 Siloxyeinheiten als heterogene Reaktionsmischung bei einer Temperatur von 70°C für 24 Stunden gerührt. Anschließend werden weitere 15 ml Hexamethyldisiloxan zugegeben und bei 70°C für 2 Stunden gerührt. Dann wird Wasser zugegeben und die Phasen getrennt. Die organische Phase wird bis zur Neutralität gewaschen, über Na₂SO₄ getrocknet und das Lösungsmittel sowie niedrigsiedende Siloxane bei einer Temperatur von 180°C und 1 Pa destillativ entfernt. Es werden 4,5 g einer zähviskosen Substanz mit einer gemäß GPC-Diagramm sehr schmalen Molmassenverteilung und der Struktur

[Me₃SiO(SiViMeO)ₙSiO_{3/2}]₈

erhalten, wobei n durchschnittlich 1,5 ist.

### Beispiel 9

2,8 g des Octa(trimethylsiloxy)octasilsesquioxans [(CH₃)₃SiOSiO_{3/2}]₈ werden zusammen mit 1 ml konzentrierter HCl, 4,6 ml Hexamethyldisiloxan und 14 ml α,ω-Di(trimethylsilyl)polymethylhydrogensiloxan mit durchschnittlich 60 Siloxyeinheiten in 30 ml Toluol gelöst und bei einer Temperatur von 70°C für 24 Stunden gerührt. Anschließend werden weitere 15 ml Hexamethyldisiloxan zugegeben und bei 70°C für 2 Stunden gerührt. Dann wird Wasser zugegeben und die Phasen getrennt. Die organische Phase wird bis zur Neutralität gewaschen, über Na₂SO₄ getrocknet und das Lösungsmittel sowie niedrigsiedende Siloxane bei einer Temperatur von 180°C und 1 Pa destillativ entfernt. Es werden 4 g einer zähviskosen Substanz mit einer gemäß GPC-Diagramm sehr schmalen Molmassenverteilung und der Struktur

[Me₃SiO(SiHMeO)ₙSiO_{3/2}]₈

erhalten, wobei n durchschnittlich 1,3 ist.

### Beispiel 10

2,8 g des Octa(trimethylsiloxy)octasilsesquioxans [(CH₃)₃SiOSiO_{3/2}]₈ werden zusammen mit 0,08 ml einer 27 %-igen Phosphornitrilchlorid-Lösung in Ethylacetat, 4,3 ml Hexamethyldisiloxan und 15,3 ml α,ω-Di(trimethylsilyl)poly(methylhydrogen/dimethyl)siloxan mit durchschnittlich 35 Siloxyeinheiten und einem Verhältnis von Dimethylsiloxyeinheiten zu Methylhydrogeneinheiten von 1 : 1 in 30 ml Toluol gelöst und bei einer Temperatur von 70°C für 24 Stunden gerührt. Anschließend werden weitere 14,9 ml Hexamethyldisiloxan zugegeben und bei 70°C für 2 Stunden gerührt. Dann wird der Katalysator mit Magnesiumoxid desaktiviert und die Feststoffe abfiltriert. Das Lösungsmittel sowie niedrigsiedende Siloxane werden bei einer Temperatur von 180°C und 1 Pa destillativ entfernt. Es werden 4,1 g einer zähviskosen Substanz mit einer gemäß GPC-Diagramm sehr schmalen Molmassenverteilung und der Struktur

[Me₃SiO(SiHMeO)ₘ(SiMe₂O)ₙSiO_{3/2}]₈

erhalten, wobei m durchschnittlich 0,7 und n durchschnittlich 0,7 ist.

### Beispiel 11

2,8 g des Deca(trimethylsiloxy)decasilsesquioxans [(CH₃)₃SiOSiO_{3/2}]₁₀ werden zusammen mit 0,08 ml einer 27 %igen Phosphornitrilchlorid-Lösung in Ethylacetat, 4,7 ml Hexamethyldisiloxan und 17 ml α,ω-Di(trimethylsilyl)polydimethylsiloxan mit durchschnittlich 65 Siloxyeinheiten in 30 ml Toluol gelöst und bei einer Temperatur von 70°C für 24 Stunden gerührt. Anschließend werden weitere 14,9 ml Hexamethyldisiloxan zugegeben und bei 70°C für 2 Stunden gerührt. Dann wird der Katalysator mit Magnesiumoxid desaktiviert und die Feststoffe abgetrennt. Das Lösungsmittel sowie niedrigsiedende Siloxane werden bei einer Temperatur von 180°C und 1 Pa destillativ entfernt. Es werden 4,5 g einer zähviskosen Substanz mit einer gemäß GPC-Diagramm sehr schmalen Molmassenverteilung und der Struktur

[Me₃SiO(SiMe₂O)ₙSiO_{3/2}]₁₀

erhalten, wobei n durchschnittlich 1,4 ist.

### Beispiel 12

Umsetzung von Octa(dimethylsiloxy)octasilsesquioxan [HSiMe₂OSiO_{3/2}]₈ mit Allylchlorid/Palladium und Bis(trimethylsilyloxy)methylhydroxysilan 2,5 ml Allylchlorid (30 mmol) werden unter Stickstoff als Schutzgas zu einem gut gerührten Gemisch aus 2,5 g Octa(dimethylsiloxy)silsesquioxan (20 mmol Si als Q-Einheit bzw. als M^{H}-Einheit), 0,05 g Palladium (auf Aktivkohle, 5%) und 8 ml Toluol bei einer Temperatur von 95°C eingetropft und für 4 Stunden gerührt.

Nach dem Abkühlen auf Raumtemperatur wird die Reaktionsmischung unter Schutzgas zu einem gut gerührten Gemisch aus 4,9 g Bis(trimethylsilyloxy)methylhydroxysilan (20 mmol Si als T^{OH}-Einheit), 3,1 ml Triethylamin (22 mmol) und 25 ml Toluol bei einer Temperatur von 50°C gegeben und für eine Stunde gerührt.

Anschließend werden Katalysator und das Triethylaminhydrochlorid abfiltriert. Das Lösungsmittel wird destillativ entfernt.

Man erhält 5,3 g einer zähviskosen Substanz (90,5 % d. Th. bezogen auf eingesetzten Kieselsäuresilylester). Das GPC-Diagramm zeigt eine einheitliche Verbindung. Die ¹H- und ²⁹Si-NMR-Daten entsprechen folgender Bruttozusammensetzung:

[(Me₃SiO)₂MeSiOSiMe₂OSiO_{3/2}]₈

### Beispiel 13

Umsetzung von Octakis(dimethylsiloxy)octasilsesquioxan [HSiMe₂OSiO_{3/2}]₈ mit Allylchlorid/Palladium und Tris (vinyldimethylsilyloxy)hydroxysilan

2,5 ml Allylchlorid (30 mmol) werden unter Stickstoff als Schutzgas zu einem gut gerührten Gemisch aus 2,5 g Octa(dimethylsiloxy)octasilsesquioxan (20 mmol Si als Q-Einheit bzw. als M^{H}-Einheit), 0,05 g Palladium (auf Aktivkohle, 5%) und 8 ml Toluol bei einer Temperatur von 95°C eingetropft und für 4 Stunden gerührt.

Nach dem Abkühlen auf Raumtemperatur wird die Reaktionsmischung unter Schutzgas zu einem gut gerührten Gemisch aus 7 g Tris(vinyldimethylsilyloxy)hydroxysilan (20 mmol Si als Q^{OH}-Einheit), 3,1 ml Triethylamin (22 mmol) und 25 ml Toluol bei einer Temperatur von 50°C gegeben und für eine Stunde gerührt.

Anschließend werden Katalysator und das Triethylaminhydrochlorid abfiltriert. Das Lösungsmittel wird destillativ entfernt.

Man erhält 8,5 g einer zähviskosen Substanz (90 % d. Th. bezogen auf eingesetzten Kieselsäuresilylester). Das GPC-Diagramm zeigt eine einheitliche Verbindung. Die ¹H- und ²⁹Si-NMR-Daten entsprechen folgender Bruttozusammensetzung:

[(CH₂=CH-SiMe₂O)₃SiOSiMe₂OSiO_{3/2}]₈

### Beispiel 14

Umsetzung von Octa(dimethylsiloxy)octasilsesquioxan [HSiMe₂OSiO_{3/2}]₈ mit H₂O, Palladium und Trimethylchlorsilan

2,5 ml Octa(dimethylsiloxy)octasilsesquioxan (20 mmol Si als Q-Einheit bzw. als M^{H}-Einheit), 0,05 g Palladium (auf Aktivkohle, 5%), 0,47 ml Wasser und 11,1 ml Aceton werden unter Rühren für eine Stunde am Rückfluß erhitzt.

Nach dem Abkühlen auf Raumtemperatur wird die Reaktionsmischung gleichzeitig mit 4,1 ml Triethylamin (29 mmol) in 10 ml Toluol zu 3,3 ml Trimethylchlorsilan (26 mmol Si als M^{Cl}-Einheit) in 20 ml Toluol bei Raumtemperatur gegeben und für 10 Minuten gerührt.

Anschließend werden Katalysator und das Triethylaminhydrochlorid abfiltriert. Das Lösungsmittel wird destillativ entfernt.

Man erhält 4,0 g einer zähviskosen Substanz (93,5 % d. Th. bezogen auf eingesetzten Kieselsäuresilylester). Das GPC-Diagramm zeigt eine einheitliche Verbindung. Die ¹H- und ²⁹Si-NMR-Daten entsprechen folgender Bruttozusammensetzung:

[Me₃SiOSiMe₂OSiO_{3/2}]₈

### Beispiel 15

Umsetzung von Octa(dimethylsiloxy)octasilsesquioxan [HSiMe₂OSiO_{3/2}]₈ mit H₂O, Palladium und 1-Chlor-7-vinyl-octamethyltetrasiloxan

2,5 ml Octa(dimethylsiloxy)octasilsesquioxan (20 mmol Si als Q-Einheit bzw. als M^{H}-Einheit) 0,05 g Palladium (auf Aktivkohle, 5%) 0,47 ml Wasser und 11,1 ml Aceton werden unter Rühren für eine Stunde am Rückfluß erhitzt.

Nach dem Abkühlen auf Raumtemperatur wird die Reaktionsmischung gleichzeitig mit 4,1 ml Triethylamin (29 mmol) in 10 ml Toluol zu 11 g 1-Chlor-7-vinyl-octamethyltetrasiloxan (26 mmol Si als D^{Cl}-Einheit) in 20 ml Toluol bei Raumtemperatur gegeben und für 10 Minuten gerührt.

Anschließend werden Katalysator und das Triethylaminhydrochlorid abfiltriert. Das Lösungsmittel wird destillativ entfernt.

Man erhält 8,2 g einer zähviskosen Substanz (91 % d. Th. bezogen auf eingesetzten Kieselsäuresilylester). Das GPC-Diagramm zeigt eine einheitliche Verbindung. Die ¹H- und ²⁹Si-NMR-Daten entsprechen folgender Bruttozusammensetzung:

[CH₂=CH-SiMe₂O(SiMe₂O)₄-SiO_{3/2}]₈

## Patentansprüche

1. Organosiliciumverbindungen der allgemeinen Formel
(RSiO_{3/2})_{z} (I),
worin
z 4, 6, 8, 10, 12 oder 14 ist und
R gleich oder verschieden sein kann und Wasserstoffatom, organischer Rest oder Reste der Formel
R¹₃SiO(SiR²₂O)ₙ- (II)
bedeutet, wobei R¹ gleich oder verschieden sein kann und Wasserstoffatom, organischer Rest oder Organosiliciumrest bedeutet, R² gleich oder verschieden sein kann und Wasserstoffatom oder organischen Rest bedeutet und n 0 oder eine ganze Zahl ist,
mit der Maßgabe, daß die Organosiliciumverbindung der Formel (I) mindestens einen Rest R der Formel (II) mit n > 0 aufweist.

2. Organosiliciumverbindungen gemäß Anspruch 1, dadurch gekennzeichnet, daß R einen Rest der Formel (II) bedeutet.

3. Organosiliciumverbindungen gemäß Anspruch 1 oder 2, dadurch gekennzeichnet, daß z 6, 8 oder 10 ist.

4. Organosiliciumverbindungen gemäß einem oder mehreren der Ansprüche 1 bis 3, dadurch gekennzeichnet, daß n eine ganze Zahl von 1 bis 20 ist.

5. Verfahren zur Herstellung der Organosiliciumverbindungen gemäß einem oder mehreren der Ansprüche 1 bis 4, dadurch gekennzeichnet, daß käfigartige Silicate der Formel
(A₄N⁺)_{z} [SiO_{5/2}⁻]_{z} · y H₂O (IV),
worin
y eine Zahl zwischen 50 und 300 ist,
z die in Formel (I) genannte Bedeutung hat und
A gleich oder verschieden sein kann und einen Alkylrest bedeutet,
mit mindestens einer Verbindung (A) der Formel
R⁵₃SiX (V),
und/oder deren Hydrolysat bzw. Kondensat, wobei
R⁵ gleich oder verschieden sein kann und eine für R² angegebene Bedeutung hat und
X eine Hydroxygruppe, einen Organyloxyrest oder ein Halogenatom bedeutet,
sowie
mindestens einer Organosiliciumverbindung (B), ausgewählt aus der Gruppe bestehend aus cyclischen Organopolysiloxanen der Formel
(SiR⁶₂O)ₓ (VI),
worin
R⁶ gleich oder verschieden sein kann und eine für R² angegebene Bedeutung hat und
x 3 bis 10 bedeutet,
Silanen der Formel
R⁷₂SiD₂ (VII),
und/oder deren Teilhydrolysaten bzw. -kondensaten, worin
R⁷ gleich oder verschieden sein kann und eine für R² angegebene Bedeutung hat, und
D gleich oder verschieden sein kann und eine für X angegebene Bedeutung hat, und
Organopolysiloxanen der Formel
R⁸₃₋ₐEₐSiO-(SiR⁸₂O)p-SiEₐR⁸₃₋ₐ (VIII),
worin
R⁸ gleich oder verschieden sein kann und eine für R² angegebene Bedeutung hat,
a gleich oder verschieden sein kann und 0 oder 1 bedeutet,
p 1 bis 1000 ist und
E gleich oder verschieden sein kann und eine für X angegebene Bedeutung hat,
umgesetzt wird.

6. Verfahren nach Anspruch 5, dadurch gekennzeichnet, daß als Komponente (B) Silan der Formel (VII) eingesetzt wird.

7. Verfahren zur Herstellung der Organosiliciumverbindungen nach einem oder mehreren der Ansprüche 1 bis 4, dadurch gekennzeichnet, daß Organosiliciumverbindungen der Formel
(R⁹₃SiOSiO_{3/2})_{z} (IX),
worin
R⁹ gleich oder verschieden sein kann und eine für R² angegebene Bedeutung hat und
z die in Formel (I) angegebene Bedeutung hat,
mit mindestens einer Organosiliciumverbindung (B), ausgewählt aus der Gruppe bestehend aus Verbindungen der Formel (VI), (VII) und (VIII) sowie
gegebenenfalls mindestens einer Verbindung (A) der Formel (V) und/oder deren Hydrolysat bzw. Kondensat
umgesetzt wird.

8. Verfahren nach Anspruch 7, dadurch gekennzeichnet, daß als Komponente (B) Verbindung der Formel (VIII) eingesetzt wird.

9. Verfahren zur Herstellung der Organosiliciumverbindungen nach einem oder mehreren der Ansprüche 1 bis 4, dadurch gekennzeichnet, daß Organosiliciumverbindungen der Formel
(HR¹⁰₂SiOSiO_{3/2})_{f} (R¹⁰₃SiOSiO_{3/2})_{z-f} (X),
worin
R¹⁰ gleich oder verschieden sein kann und eine für R² angegebene Bedeutung hat,
z die in Formel (I) angegebene Bedeutung hat und
f eine ganze Zahl von 1 bis z bedeutet,
in einer 1. Stufe mit Allylchlorid in Gegenwart von Platinmetallen und/oder deren Verbindungen zu den entsprechenden Chlorverbindungen der Formel 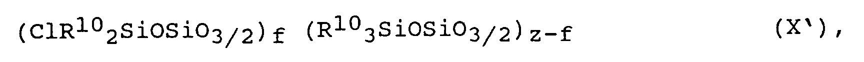 wobei R¹⁰, f und z die obengenannte Bedeutung haben, umgesetzt wird und anschließend in einer 2. Stufe Verbindungen der Formel (X 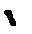 ) mit mindestens einer Organosiliciumverbindung (C), ausgewählt aus der Gruppe bestehend aus Silanen der Formel
R¹¹₃SiOH (XI),
worin R¹¹ gleich oder verschieden sein kann und eine für R² angegebene Bedeutung hat, Organopolysiloxanen der Formel
R¹²₃SiO(SiR¹²₂O)ᵣSiR¹²₂OH (XII),
worin R¹² gleich oder verschieden sein kann und eine für R² angegebene Bedeutung hat und r 0 oder eine ganze Zahl von 1 bis 10 bedeutet,
Organopolysiloxanen der Formel
(R¹²₃SiO(SiR¹²₂O)ᵣ)₂SiR¹²OH (XIII),
worin R¹² und r die oben angegebene Bedeutung haben, und Organopolysiloxanen der Formel
(R¹²₃SiO(SiR¹²₂O)ᵣ)₃SiOH (XIV),
worin R¹² und r die oben angegebene Bedeutung haben, umgesetzt werden.

10. Verfahren zur Herstellung der Organosiliciumverbindungen der Formel (I), dadurch gekennzeichnet, daß organosiliciumverbindungen der Formel (X)
in einer 1. Stufe mit Wasser in Gegenwart von Platinmetallen und/oder deren Verbindungen zu den entsprechenden Hydroxyverbindungen der Formel 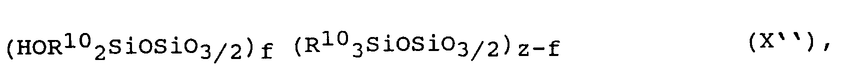 wobei R¹⁰, f und z die obengenannte Bedeutung haben, umgesetzt wird und anschließend in einer 2. Stufe Verbindungen der Formel (X 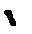 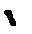 ) mit mindestens einer Organosiliciumverbindung (C), ausgewählt aus der Gruppe bestehend aus Silanen der Formel 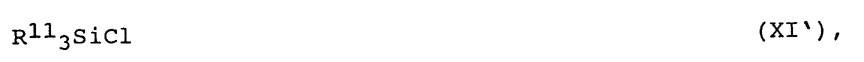 worin R¹¹ gleich oder verschieden sein kann und eine für R² angegebene Bedeutung hat,
Organopolysiloxanen der Formel 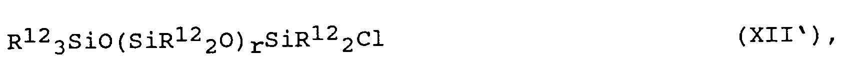 worin R¹² gleich oder verschieden sein kann und eine für R² angegebene Bedeutung hat und r 0 oder eine ganze Zahl von 1 bis 10 bedeutet,
Organopolysiloxanen der Formel 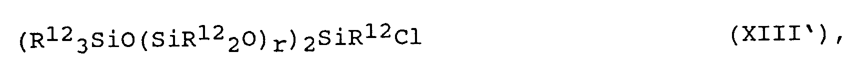 worin R¹² und r die oben angegebene Bedeutung haben, und Organopolysiloxanen der Formel 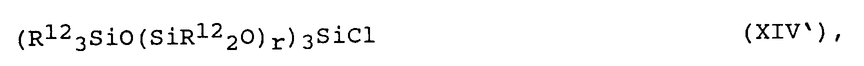 worin R¹² und r die oben angegebene Bedeutung haben, umgesetzt werden.
